(19) Europäisches Patentamt
European Patent Office
Office européen des brevets

(11) **EP 3 757 624 B1**

(12) **EUROPÄISCHE PATENTSCHRIFT**

(45) Veröffentlichungstag und Bekanntmachung des Hinweises auf die Patenterteilung:
**22.11.2023 Patentblatt 2023/47**

(21) Anmeldenummer: **19182490.3**

(22) Anmeldetag: **26.06.2019**

(51) Internationale Patentklassifikation (IPC):
**G01T 1/40** *(2006.01)* **G01T 7/00** *(2006.01)*
**G01F 23/288** *(2006.01)*

(52) Gemeinsame Patentklassifikation (CPC):
**G01T 1/40; G01F 23/288; G01T 7/005;** G01F 25/20

(54) **VERFAHREN UND ANORDNUNG ZUR CHARAKTERISIERUNG EINES DETEKTORS ZUR ERFASSUNG RADIOAKTIVER STRAHLUNG**

METHOD AND ASSEMBLY FOR CHARACTERIZING A DETECTOR FOR DETECTING RADIOACTIVE RADIATION

PROCÉDÉ ET DISPOSITIF DE CARACTÉRISATION D'UN DÉTECTEUR PERMETTANT DE DÉTECTER LE RAYONNEMENT RADIOACTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.12.2020 Patentblatt 2020/53**

(73) Patentinhaber: **Safetec GmbH**
**69123 Heidelberg (DE)**

(72) Erfinder:
• **RADTKE, Johannes**
**21149 Hamburg (DE)**

• **THOMAS, Tim**
**68723 Schwetzingen (DE)**

(74) Vertreter: **Bals & Vogel Patentanwälte PartGmbB et al**
**Konrad-Zuse-Str. 4**
**44801 Bochum (DE)**

(56) Entgegenhaltungen:
**DE-A1-102006 006 411     DE-A1-102013 215 606**

## Beschreibung

Gegenstand der vorliegenden Erfindung ist ein Verfahren zur Charakterisierung eines Detektors zur Erfassung radioaktiver Strahlung.

Detektoren zur Erfassung radioaktiver Strahlung weisen bei der Vermessung eines gegebenen Messgutes in der Praxis einen Wirkungsgrad auf, welcher ein Maß für die Empfindlichkeit und Genauigkeit des Detektors darstellt, mit der die radioaktive Strahlung dieses Messgutes detektiert werden kann. Der Wirkungsgrad ist insbesondere abhängig von der Geometrie des Messgutes, seiner Anordnung relativ zum Detektor, von der Aktivitätsverteilung innerhalb des Messguts sowie von der spezifischen Detektorcharakteristik bezüglich der zu messenden radioaktiven Strahlung. Wenn ein Detektor dazu verwendet werden soll, eine Aussage über die absolute Aktivität des Messgutes zu treffen, muss der Detektor daher zunächst bezüglich des vorliegenden Messgutes kalibriert werden. Das Dokument DE 10 2006 006411 beschreibt ein kompaktes Dosimeter und ein Verfahren zur Charakterisierung eines Detektors. Ein Ausführungsbeispiel umfasst einen Dosimeter und ein Verfahren zur genauen Bestimmung von Dosismessgrößen der einfallenden radioaktiven Strahlung. Ein weiteres Ausführungsbeispiel zeigt ein Gerät und ein Verfahren zur Bestimmung von Energieinformationen.

Die Beziehung zwischen Schwellenhöhe und Energiedeposition wird anhand einer Messung oder einer Simulation ermittelt.

Eine solche Kalibrierung ist insbesondere erforderlich, wenn ein Messgut im strahlenschutzrechtlichen Sinne freigegeben werden soll. Eine solche Freigabe erfordert die Feststellung, dass das Messgut eine bestimmte in der Strahlenschutzverordnung festgelegte Aktivität nicht überschreitet. Beispielsweise fallen beim Rückbau von kerntechnischen Anlagen große Messgutmengen an, welche vor der Entsorgung oder Wiederverwendung "freigemessen" werden müssen.

Zur Kalibrierung von Detektoren ist es im Stand der Technik bekannt, für ein vorliegendes Messgut ein äquivalentes Test-Messgut zu erstellen und mit dem Detektor zu vermessen. Dazu muss das äquivalente Test-Messgut eine bekannte Aktivität, eine an das reale Messgut angenäherte Geometrie sowie eine vergleichbare Aktivitätsverteilung aufweisen. Dazu müssen Näherungen und Abschätzungen gemacht werden, welche zu großen Ungenauigkeiten führen, die in Form von Sicherheiten bei der Kalibrierung konservativ berücksichtigt werden müssen. Zudem ist die Erstellung des Test-Messgutes sehr aufwändig. Ausgehend davon ist es die Aufgabe der vorliegenden Erfindung, ein Verfahren sowie eine Anordnung zur Charakterisierung eines Detektors zur Erfassung radioaktiver Strahlung bereitzustellen, welches bzw. welche diese Nachteile zumindest teilweise vermeidet. Gelöst wird diese Aufgabe mit den Merkmalen der unabhängigen Ansprüche 1 und 15.

Vorteilhafte Ausführungsformen sind in den abhängigen Ansprüchen angegeben.

Zunächst werden einige im Rahmen der Erfindung verwendete Begriffe erläutert.

Der Detektor weist üblicherweise ein für die Strahlung empfindliches Detektorvolumen auf. Wenn im Rahmen der Erfindung von auf den Detektor auftreffenden radioaktiven Teilchen gesprochen wird, sind damit diejenigen Teilchen gemeint, welche durch das für die Erfassung der Teilchen vorgesehene Detektorvolumen hindurchtreten. Ein Detektor kann neben dem genannten Detektorvolumen eine Detektorelektronik zur Registrierung der auftreffenden Teilchen sowie eine Zähleinheit zur Erzeugung einer Zählrate aufweisen.

Ein Prüfstrahler bezeichnet im Rahmen der Erfindung eine Materialanordnung, für die eine Aktivitätsverteilung sowie eine Emissionswahrscheinlichkeit für den Austritt eines Teilchens bekannt ist. Wenn eine Aktivitätsverteilung eines Strahlers bekannt ist, bedeutet dies, dass sowohl die Gesamtaktivität des Strahlers bekannt ist, als auch, zumindest bis zu einem gewissen Grad, die geometrische Verteilung der zur Gesamtaktivität beitragenden Radionuklide innerhalb des Strahlers. Bevorzugt weist der Prüfstrahler lediglich ein einzelnes Radionuklid auf, beispielsweise kann der Prüfstrahler eines der Radionuklide Co-60, Ba-133 oder Cs-137 aufweisen. Weiter vorzugsweise handelt es sich bei dem Prüfstrahler im Wesentlichen um einen Punktstrahler. Dies bedeutet vorzugsweise, dass die Dimensionen des Prüfstrahlers entlang der drei Raumrichtungen kleiner sind als 5 cm.

Das Energiespektrum, welches gemäß Schritt d. simuliert wird, gibt Auskunft über die Anzahl der vom Prüfstrahler emittierten und mit dem Detektorvolumen wechselwirkenden Teilchen sowie über deren jeweils im Detektorvolumen deponierte Energie. Dies beinhaltet vorzugsweise auch Teilchen, welche durch den Detektor hindurchtreten und dabei einen Teil ihrer Energie deponieren, an einem Rand des Detektors (beispielsweise an einer Abschirmung zur Unterdrückung von Hintergrundstrahlung) rückgestreut werden, und nach Rückstreuung weitere Energie im Detektor deponieren. Das Energiespektrum wird mit Hilfe einer Multiplikation der simulierten Wahrscheinlichkeit eines Teilchens, eine bestimmte Energie im Detektor zu deponieren, mit der Aktivität der betrachteten Prüfquelle berechnet.

Der mathematische Zusammenhang stellt ein Maß für die Wahrscheinlichkeit dar, dass ein auf den Detektor auftreffendes Teilchen einer bestimmten Energie vom Detektor tatsächlich registriert und als Zählimpuls erfasst wird. Dahinter steht die Erkenntnis, dass nicht jedes auf den Detektor auftreffende Teilchen einen Zählimpuls auslöst, welcher in der Zählrate berücksichtigt wird, sondern dass dies lediglich mit einer gewissen Wahrscheinlichkeit geschieht, welche unter anderem von der Teilchenenergie abhängt. Ist der Detektor beispielsweise als Szintillationszähler ausgebildet, so erzeugt ein auf den Detektor auftreffendes Teilchen innerhalb des Detektorvolumens einen Lichtblitz, welcher von einem Photoelektronenvervielfacher in einen elektrischen Puls umgewandelt wird. Der elektrische Puls wird anschließend üblicherweise einem Diskriminator zugeführt, welcher das elektrische Signal erst ab einer gewissen Stärke an eine Zähleinheit weiterleitet und ansonsten verwirft. Der Diskriminator sorgt so dafür, dass kleinere Impulse, welche nicht von der zu untersuchenden Strahlungsquelle stammen, nicht mitgezählt werden. Es kann allerdings auch vorkommen, dass ein vom untersuchten Strahler emittiertes Teilchen keine ausreichende Pulshöhe erzeugt und daher nicht gezählt wird. Einem Teilchen kann daher lediglich eine Wahrscheinlichkeit zugeordnet werden, mit der es detektiert wird.

Der diese Wahrscheinlichkeit abbildende mathematische Zusammenhang kann einen oder mehrere Kalibrierparameter aufweisen. Im Folgenden wird an einigen Stellen der Einfachheit halber nur ein einzelner Kalibrierparameter erwähnt und der Verweis darauf, dass auch mehrere Kalibrierparameter vorgesehen sein können, weggelassen, ohne dass dadurch eine Beschränkung auf den einzelnen Parameter beabsichtigt ist.

Im Rahmen der Erfindung wird vorgeschlagen, den Prüfstrahler in einer relativ zum Detektor bekannten Position zu platzieren und eine entsprechende Zählrate zu erfassen. Weiterhin ist vorgesehen, eine Simulation zur Ermittlung des genannten Energiespektrums durchzuführen. In der Simulation wird berücksichtigt, in welcher Position der Detektor während der realen Messung gemäß Verfahrensschritt c. relativ zum Prüfstrahler angeordnet ist und welche Eigenschaften der reale Prüfstrahler aufweist. Zudem werden auch die Eigenschaften des Detektormaterials berücksichtigt.

Das simulierte Spektrum gibt Auskunft über die in einem betrachteten Zeitraum zu erwartenden auf den Detektor auftreffenden radioaktiven Teilchen sowie über deren im Detektor deponierte Energie. Dieses Spektrum wird nun zusammen mit dem definierten mathematischen Zusammenhang verwendet, um eine simulierte Zählrate zu berechnen. Das simulierte Spektrum wird dabei vorzugsweise in Klassen aufgeteilt, welche jeweils einen Energiebereich repräsentieren. Jeder Klasse kann in Abhängigkeit des Kalibrierparameters eine Detektionswahrscheinlichkeit zugeordnet werden. Vorzugsweise wird dabei außerdem die Photonenemissionswahrscheinlichkeit berücksichtigt. Die Photonenemissionswahrscheinlichkeit gibt die Wahrscheinlichkeit an, dass ein Nuklid bei einem Zerfall ein Photon mit einer bestimmten Energie emittiert. Ein Beispiel hierfür ist Cs-137, dessen Zerfall in etwa 85% aller Fälle zur Emission eines Photons mit der Energie 662 keV. Die Zählrate kann anschließend beispielsweise mittels einer Monte Carlo Simulation berechnet werden, wobei dabei vorzugsweise für relevante Größen (insbesondere für das simulierte Spektrum, die Kalibrierparameter der mathematischen Funktion und die Aktivität des Prüfstrahlers) Erwartungswerte sowie deren Unsicherheiten berücksichtig werden. Die Photonenemissionswahrscheinlichkeiten können einer Datenbank entnommen werden.

Schließlich wird der Kalibrierparameter des mathematischen Zusammenhangs geändert, bis die gemessene Zählrate an die simulierte Zählrate angepasst ist bzw. dieser entspricht.

Der so erhaltene Kalibrierparameter kann dann bei einer nachfolgenden Vermessung eines realen Messgutes verwendet werden, um den Wirkungsgrad des Detektors bezüglich des realen Messgutes zu bestimmen, ohne dass es erforderlich ist, für das reale Messgut ein Test-Messgut herzustellen. Dazu kann wiederum eine Simulation zur Ermittlung eines Energiespektrums der erwarteten von dem realen Messgut emittierten und auf den Detektor auftreffenden Strahlung durchgeführt werden. Bei dieser Simulation werden vorzugsweise die Geometrie des realen Messguts, die bei der Messung vorherrschende Position des realen Messguts relativ zum Detektor sowie die im realen Messgut vermuteten Radionuklide und deren vermutete Aktivitätsverteilung berücksichtigt. Das simulierte Energiespektrum kann dann zusammen mit dem definierten mathematischen Zusammenhang und dem durch das erfindungsgemäße Verfahren ermittelten Kalibrierparameter verwendet werden, um den Wirkungsgrad w des Detektors in Bezug auf das reale Messgut mit einer guten Genauigkeit zu berechnen. Mit Hilfe des Wirkungsgrades w kann aus der am realen Messgut gemessenen Zählrate $x$ die Aktivität A bestimmt werden beispielsweise gemäß der Formel: $A = (x - x_0) \times w$, wobei $x_0$ die Nulleffektzählrate darstellt. Durch den bzw. die mit Hilfe des erfindungsgemäßen Verfahrens bestimmten Kalibrierparameter kann der Detektor somit kalibriert werden, ohne dass eine aufwändige Erstellung eines Test-Messgutes notwendig ist.

Um die Genauigkeit der Kalibrierung zu verbessern kann vorgesehen sein, dass in Schritt a. eine Mehrzahl von Prüfstrahlern bereitgestellt wird, wobei die Prüfstrahler voneinander verschiedene Radionuklide aufweisen. Vorzugsweise werden die Schritte b. bis d. für jeden der Prüfstrahler durchgeführt, wobei die daraus erhaltenen zusätzlichen Informationen bei der Anpassung gemäß Schritt g. berücksichtigt werden. Indem zur Bestimmung des Kalibrierparameters mehrere voneinander verschiedene Prüfstrahler verwendet werden, kann die Energieabhängigkeit der Detektionswahrscheinlichkeit mit größerer Genauigkeit nachgebildet werden.

Eine weitere Verbesserung der Genauigkeit der Kalibrierung kann dadurch erzielt werden, dass der Prüfstrahler bzw. die Prüfstrahler in einer bevorzugten Ausführungsform an einer weiteren von der in Schritt b. genannten verschiedenen Position relativ zum Detektor positioniert werden, wobei die Schritte c. und d. jeweils für die weitere Position durchgeführt werden, wobei die daraus erhaltenen zusätzlichen Informationen bei der Anpassung gemäß Schritt g. berücksichtigt werden.

Vorzugsweise wird zwischen dem Prüfstrahler und dem Detektor eine Abschirmung angeordnet, wobei die Schritte c. und d. unter Berücksichtigung der Abschirmung durchgeführt werden, wobei die daraus erhaltenen zusätzlichen Informationen bei der Anpassung gemäß Schritt g. berücksichtigt werden. Von dem Prüfstrahler emittierte Teilchen wechselwirken mit der Abschirmung und geben dabei üblicherweise zumindest einen Teil Ihrer Energie ab. Das simulierte Energiespektrum, in dem die Abschirmung berücksichtigt ist, verschiebt sich dadurch zu niedrigeren Energien. Zudem hat die Abschirmung auch einen Einfluss auf die gemäß Schritt c. erfasste Zählrate. Durch die Abschirmung können so zusätzliche Mess- und Simulationswerte gewonnen werden, welche in die Anpassung zur Ermittlung des Kalibrierparameters einfließen und somit dessen Genauigkeit erhöhen können.

Der mathematische Zusammenhang wird in einer bevorzugten Ausführungsform durch eine Detektorfunktion gebildet, welche zumindest eine der nachfolgenden Eigenschaften aufweist: i. sie ist monoton steigend, und/oder ii. ihre Definitionsmenge wird aus Energiewerten gebildet, welche größer als null sind, und/oder iii. ihre Definitionsmenge wird auf eine Zielmenge abgebildet, welche zwischen 0 und 1 liegt.

Im einfachsten Fall kann der mathematische Zusammenhang zur Beschreibung der Detektionswahrscheinlichkeit durch eine Sprungfunktion (auch Heavisidefunktion genannt) gebildet sein. Die Sprungfunktion hat für Teilchenenergien unterhalb eines Schwellwertes den Funktionswert "0" und für Teilchenenergien größer als der Schwellwert den Funktionswert "1". Der Schwellwert stellt einen Kalibrierparameter im Sinne der vorliegenden Erfindung dar. In diesem Modell, welches eine starke Vereinfachung darstellt, wird also angenommen, dass lediglich Teilchen mit einer Energie oberhalb des Schwellwertes als Zählimpuls registriert werden. Dennoch können trotz der starken Vereinfachung brauchbare Ergebnisse erzielt werden. Verbessert werden können die Ergebnisse durch eine bevorzugte Ausführungsform, in der der mathematische Zusammenhang durch eine kumulative Pareto-Verteilungsfunktion gebildet wird.

Vorzugsweise weist der Prüfstrahler ein Volumen auf, welches kleiner ist als 8 l, bevorzugt kleiner als 1 l, weiter bevorzugt kleiner als 0,125 l. Der Prüfstrahler kann insbesondere in drei senkrecht zueinander stehenden Raumrichtungen eine Ausdehnung aufweisen, welche kleiner ist als 20 cm, bevorzugt kleiner als 10 cm, weiter bevorzugt kleiner als 5 cm. Wenn der Prüfstrahler ein kleines Volumen bzw. eine kleine Ausdehnung hat (also je weiter sich seine Form an einen Punktstrahler annähert), desto genauer kann das Energiespektrum gemäß Schritt c. simuliert werden. Die dem Kalibrierungsparameter anhaftende Messunsicherheit kann dadurch weiter verringert werden.

In einer bevorzugten Ausführungsform ist der Detektor als Szintillationszähler, bevorzugt als organischer Szintillationszähler und weiter bevorzugt als Plastikszintillationszähler ausgebildet. Aufgrund des inneren Aufbaus und der Funktionsweise von Plastikszintillationszählern kann diese Detektorart mit Hilfe des erfindungsgemäßen Verfahrens besonders genau charakterisiert werden. Weiterhin ist es von Vorteil, wenn der Detektor zur Erfassung einer ersten Strahlungsart ausgebildet und gegenüber dem Eintritt anderer Strahlungsarten abgeschirmt ist. Bei der Verwendung von Szintillationszählern können diese insbesondere gegenüber $\alpha$-Strahlung und $\beta$-Strahlung abgeschirmt sein. Vorzugsweise weist der Detektor eine Detektorfläche von mehr als 400 cm$^2$ auf. Außerdem ist es von Vorteil, wenn der Detektor ein Detektorvolumen von mehr als 2000 cm$^3$ aufweist. Es hat sich gezeigt, dass durch die vorstehend genannten Maßnahmen, insbesondere bei der Verwendung von Plastikszintillationszählern, ein Gesamtwirkungsgrad mit einer Unsicherheit von weniger als 10% berechnet werden kann.

Das Platzieren des radioaktiven Prüfstrahlers an einer relativ zum Detektor vorgegebenen Position kann mit einer Genauigkeit von weniger als 6 cm, vorzugsweise von weniger als 3 cm, weiter vorzugsweise von weniger als 2 cm erfolgen. Es hat sich gezeigt, dass durch die genannte Genauigkeit die Güte der Detektorcharakterisierung deutlich erhöht wird.

Gegenstand der Erfindung ist weiterhin ein Verfahren zur Charakterisierung einer Freimessanlage mit einer Prüfkammer und einer Mehrzahl von um die Prüfkammer herum angeordneten Detektoren, gekennzeichnet dadurch, dass zumindest einer der und vorzugsweise alle Detektoren durch das einfindungsgemäße Verfahren zur Charakterisierung eines Detektors charakterisiert wird.

In einer bevorzugten Ausführungsform weist die Prüfkammer ein Volumen auf, welches zwischen 1 und 20 m$^3$, vorzugsweise zwischen 5 und 15 m$^3$, weiter vorzugsweise zwischen 8 und 12 m$^3$ liegt. Es kann vorgesehen sein, dass der Prüfstrahler zur Durchführung einer ersten Detektorcharakterisierung in Schritt b. mittig in der Prüfkammer platziert wird, wobei der Prüfstrahler zur Durchführung einer weiteren Detektorcharakterisierung in einem Abstand zu einer Seitenwand der Prüfkammer platziert wird, welcher kleiner ist als 100 cm, bevorzugt kleiner als 50 cm, weiter bevorzugt kleiner als 20 cm. Insbesondere kann vorgesehen sein, dass die Prüfkammer im Wesentlichen quaderförmig ausgebildet ist, wobei der Prüfstrahler in einem Abstand zu den Ecken des Quaders platziert wird, welcher kleiner ist als 100 cm, bevorzugt kleiner als 50 cm, weiter bevorzugt kleiner als 20 cm. Es hat sich gezeigt, dass insbesondere dann Kalibrierungsfehler auftreten können, wenn sich ein reales Messgut bis in die Nähe einer Ecke der Prüfkammer erstreckt. Durch die Platzierung des Prüfstrahlers in der Nähe einer Ecke der Prüfkammer kann dieser Prüfkammerbereich besser vermessen werden und die Kalibrierung diesbezüglich verbessert werden.

Das Verfahren zur Charakterisierung einer Freimessanlage sowie die Anordnung zur Charakterisierung eines Detektors können fortgebildet werden durch Merkmale, welche bereits in Zusammenhang mit dem erfindungsgemäßen Verfahren zur Charakterisierung eines Detektors beschrieben wurden.

Nachfolgend wird die Erfindung anhand bevorzugter Ausführungsformen unter Bezugnahme auf die beigefügten Zeichnungen beispielhaft erläutert. Es zeigen:

Figur 1: eine schematische Übersicht über eine erfindungsgemäße Anordnung zur Charakterisierung eines Detektors;

Figur 2: eine schematische Übersicht über eine Freimessanlage mit einer erfindungsgemäßen Anordnung zur Charakterisierung eines Detektors.

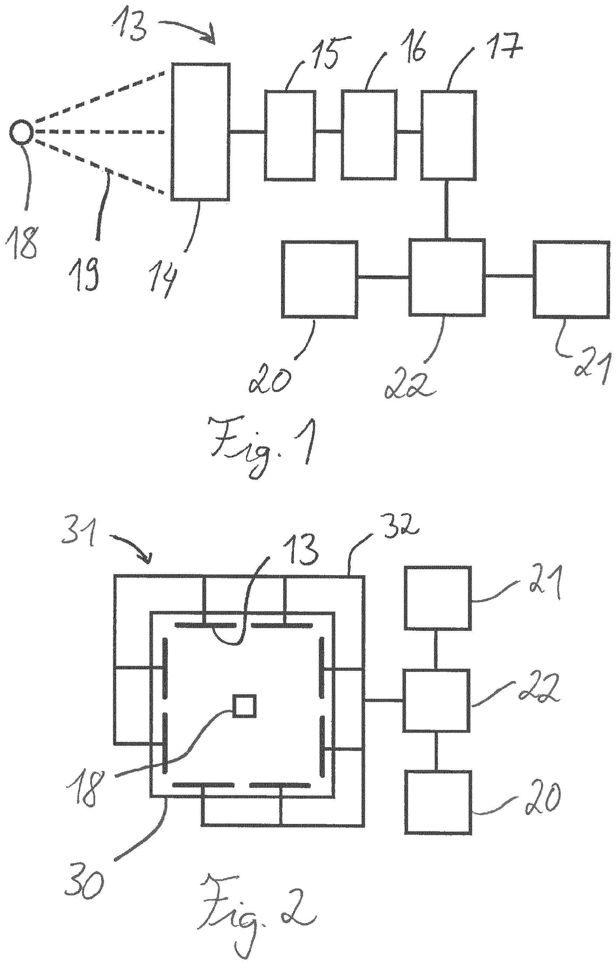

Figur 1 zeigt eine schematische Übersicht über eine erfindungsgemäße Anordnung zur Charakterisierung eines Detektors 13. Der Detektor ist ein Plastikszintillationszähler, welcher zur Erfassung von Gammastrahlung ausgebildet ist. Gegenüber $\alpha$- und $\beta$-Strahlung ist der Detektor abgeschirmt. Der Detektor weist ein Detektorvolumen 14 von 2500 cm$^3$ bei einer Detektorfläche von etwa 400 cm$^2$ auf. Der Begriff Detektorfläche bezeichnet dabei die der Strahlenquelle zugewandte Fläche des Detektors. Zudem umfasst der Detektor einen Photoelektronenvervielfacher 15, einen Diskriminator 16, sowie eine Zähleinheit 17. In einem vorgegebenen Abstand zum Detektorvolumen 15 ist ein Prüfstrahler 18 angeordnet. Bei dem Prüfstrahler 18 handelt es sich um eine Materialanordnung mit kugelförmiger Gestalt, deren Durchmesser etwa 1 cm beträgt. Der Prüfstrahler kann somit als Punktquelle im Sinne der Erfindung angesehen werden. Der Prüfstrahler 18 weist das Radionuklid Co-60 auf und sendet (unter anderem) Gammastrahlung bzw. Gammaquanten 19 aus. Die Aktivität des Prüfstrahlers 18, das heißt die Anzahl der pro Zeiteinheit ausgesendeten Gammaquanten 19 ist vorliegend bekannt.

Zumindest ein Teil der ausgesendeten Gammaquanten 19 trifft auf das Detektorvolumen 14. Dort wechselwirken die Gammaquanten 19 mit den Elektronen des Detektormaterials. Durch diese Wechselwirkung werden sogenannte Szintillationsphotonen erzeugt, welche unter Ausnutzung des Photoeffekts vom Photoelektronenvervielfacher 15 in einen elektrischen Puls umgewandelt werden. Der elektrische Puls wird an einen Diskriminator 16 weitergeleitet, welcher den elektrischen Puls bei Überschreiten eines gewissen Schwellwertes an die Zähleinheit 17 weiterleitet. Die Zähleinheit 17 erfasst den elektrischen Puls als Zählereignis und bildet so über den Zeitraum der Messung eine Zählrate (nachfolgend auch reale Zählrate genannt). Unterschreitet der vom Photoelektronenvervielfacher 15 erzeugte Puls den genannten Schwellwert, so verwirft der Diskriminator 16 den elektrischen Puls.

Die erfindungsgemäße Anordnung umfasst weiterhin ein Simulationsmodul 20, ein Funktionsmodul 21 sowie eine Anpassungseinheit 22. Das Funktionsmodul 21 definiert einen mathematischen Zusammenhang, mit dem eine Gammaquanten-Energie E auf eine Wahrscheinlichkeit $F(E)$ abbildet wird. Der Zahlenwert von $F(E)$ liegt zwischen 0 und 1 und gibt für jeden Energiewert E die Wahrscheinlichkeit an, mit der ein Teilchen dieser Energie, welches auf das Detektorvolumen 14 trifft, als Zählereignis erfasst wird. Der mathematische Zusammenhang wird vorliegend durch eine kumulative Pareto-Verteilungsfunktion gebildet, welche wie folgt definiert ist:

$$F(E) \begin{cases} 1 - \left(\frac{C}{E}\right)^U, & E \geq C, \\ 0, & E < C \end{cases}$$

wobei E die Teilchenenergie, C eine Diskriminatorschwelle und U eine Steigung der Verteilungsfunktion bezeichnen. Die Werte C und U bilden Kalibrierungsparameter im Sinne der vorliegenden Erfindung. Dabei kann mit dem Parameter C die Funktionsweise des Diskriminators nachgebildet werden, wobei der Parameter U zur Herstellung eines phänomenologischen Zusammenhangs zwischen einer Diskriminatorspannung, einer Versorgungsspannung des Photoelektronenvervielfachers sowie einer Ausdehnung des Detektorvolumens dient. Der mathematische Zusammenhang wird vom Funktionsmodul 21 and die Anpassungseinheit 22 ausgegeben.

Das Simulationsmodul 20 umfasst einen Eingang (nicht gezeigt), in den verschiedene Simulationsparameter eingegeben werden können. Dazu zählen die Aktivitätsverteilung des Prüfstrahlers 18, die Photonenemissionswahrscheinlichkeit des Prüfstrahlers, die Position des Prüfstrahlers 18 und dessen Anordnung relativ zum Detektorvolumen 14. Anhand dieser Simulationsparameter führt das Simulationsmodul 20 eine Simulation durch, deren Ergebnis ein Energiespektrum ist, welches die Anzahl der vom Prüfstrahler 18 ausgesendeten und auf das Detektorvolumen auftreffenden radioaktiven Teilchen 19 sowie deren im Detektorvolumen deponierte Energien angibt. Dieses Energiespektrum wird ebenfalls an die Anpassungseinheit 22 ausgegeben.

Die Anpassungseinheit 22 verwendet den mathematischen Zusammenhang sowie das Energiespektrum, um eine simulierte Zählrate zu ermitteln. Diese simulierte Zählrate wird an die reale Zählrate, welche von der Zähleinheit 17 ausgegeben wurde, angepasst, indem die Kalibrierparameter verändert werden.

Die oben genannten Verfahrensschritte werden anschließend wiederholt, wobei jeweils eine oder mehrere der nachfolgenden Modifikationen vorgenommen werden:

- die Position des Prüfstrahlers 18 relativ zum Detektorvolumen 14 wird verändert,

- es werden Prüfstrahler verwendet, welche jeweils andere Radionuklide aufweisen (und welche somit andere Teilchenenergien aussenden),

- es werden Abschirmungen zwischen dem Prüfstrahler und dem Detektorvolumen angeordnet.

Jede der genannten Modifikationen führt zu einem weiteren Paar einer simulierten Zählrate sowie einer realen Zählrate. Diese weiteren Wertepaare fließen ebenfalls in die Anpassung zur Ermittlung der Kalibrierparameter ein, so dass diese mit größerer Genauigkeit bestimmt werden können. Unter Ausnutzung der Tatsache, dass die dominierende Wechselwirkung im Plastikszintillationszähler aufgrund der niedrigen Massenzahl des Detektormaterials die Compton-Wechselwirkung ist, ist es im Rahmen der Erfindung möglich, eine von den verwendeten Radionukliden, den verwendeten Abschirmungen sowie der verwendeten Messgeometrie unabhängige Detektorcharakterisierung zu erhalten. Dabei wird durch die Kalibrierparameter eine realitätsnahe Anpassung der Zählrate ermöglicht, indem die Interaktion eines Photons mit dem Detektormaterial in Abhängigkeit von dessen Energieeintrag als Zählereignis zugelassen (also detektiert) oder verworfen wird. Durch diesen Mechanismus wird die Zählelektronik realitätsnah nachgebildet, so dass beliebige Energiespektren (abhängig vom Radionuklid und Abschirmung) in eine erwartete Zählrate überführt werden können.

Figur 2 zeigt eine schematische Ansicht einer erfindungsgemäßen Anordnung, welche zur Charakterisierung einer Freimessanlage 31 verwendet wird. Die Freimessanlage 31 umfasst eine Prüfkammer 30, in der ein Prüfstrahler 18 angeordnet ist. Um die Prüfkammer 30 herum ist eine Mehrzahl von Detektoren 13 angeordnet, welche identisch zu dem in Figur 1 gezeigten Detektor ausgebildet sind. Über Signalleitungen 32 sind die Detektoren 13 mit einer Anpassungseinheit 22 verbunden. Die Anordnung weist zudem ein Simulationsmodul 20 sowie ein Funktionsmodul 21 auf. Das erfindungsgemäße Verfahren kann wie in Verbindung mit Figur 1 beschrieben verwendet werden, um jeden der Detektoren 13 bezüglich eines gegebenen Messgutes zu charakterisieren, so dass die Freimessanlage insgesamt bezüglich des gegebenen Messgutes charakterisiert wird.

Nach der Charakterisierung der Detektoren können die Wirkungsgrade der Detektoren bezüglich eines realen Messgutes ermittelt werden, indem auf die Kalibrierparameter zurückgegriffen wird. Da, wie oben erläutert, die Detektorcharakterisierung und somit die Kalibrierparameter unabhängig von der Messgeometrie, der Abschirmung sowie der enthaltenen Radionuklide sind, können die Wirkungsgrade bezüglich eines beliebigen Messgutes ermittelt werden.

**Patentansprüche**

1. Verfahren zur Charakterisierung eines Detektors (13) zur Erfassung radioaktiver Strahlung (19), umfassend die nachfolgenden Schritte:

a) Bereitstellen eines radioaktiven Prüfstrahlers (18), welcher zur Aussendung radioaktiver Teilchen (19) ausgebildet ist,

b) Platzieren des radioaktiven Prüfstrahlers (18) an einer relativ zum Detektor (13) vorgegebenen Position;

c) Erfassen der vom Prüfstrahler (18) ausgesendeten und auf den Detektor (13) auftreffenden radioaktiven Teilchen (19) zur Ermittlung einer Zählrate;

d) Durchführen einer Simulation zur Ermittlung eines Energiespektrums der von dem radioaktiven Prüfstrahler (18) emittierten und auf den Detektor (13) auftreffenden Strahlung, wobei berücksichtigt wird, in welcher Position der Detektor (13) während der realen Messung gemäß Verfahrensschritt c) relativ zum Prüfstrahler (18) angeordnet ist und welche Eigenschaften der Prüfstrahler (18) aufweist;

e) Definieren eines mathematischen Zusammenhangs zwischen der Energie eines auf den Detektor (13) auftreffenden Teilchens und einer Detektionswahrscheinlichkeit dieses Teilchens, wobei der mathematische Zusammenhang zumindest einen Kalibrierparameter aufweist;

f) Verwenden des mathematischen Zusammenhangs gemäß Schritt e. sowie des Energiespektrums gemäß Schritt d., um eine simulierte Zählrate zu ermitteln;

g) Anpassen der simulierten Zählrate an die in Schritt c. ermittelte Zählrate, wobei zur Anpassung der zumindest eine Kalibrierparameter variiert wird, wobei der so erhaltene Kalibrierparameter bei einer nachfolgenden Vermessung eines realen Messguts verwendbar ist, um den Wirkungsgrad des Detektors (13) bezüglich des realen Messgutes zu bestimmen.

2. Verfahren gemäß Anspruch 1, bei dem in Schritt a. eine Mehrzahl von Prüfstrahlern (18) bereitgestellt wird, wobei die Prüfstrahler voneinander verschiedene Radionuklide aufweisen, wobei die Schritte b. bis d. für jeden der Prüfstrahler (18) durchgeführt werden, wobei die daraus erhaltenen zusätzlichen Informationen bei der Anpassung gemäß Schritt g. berücksichtigt werden.

3. Verfahren gemäß Anspruch 1 oder 2, bei dem der Prüfstrahler (18) bzw. die Prüfstrahler an einer weiteren von der in Schritt b. genannten verschiedenen Position relativ zum Detektor (13) positioniert werden, wobei die Schritte c. und d. jeweils für die weitere Position durchgeführt werden, wobei die daraus erhaltenen zusätzlichen Informationen bei der Anpassung gemäß Schritt g. berücksichtigt werden.

4. Verfahren gemäß einem der Ansprüche 1 bis 3, bei dem zwischen dem Prüfstrahler (18) und dem Detektor (13) eine Abschirmung angeordnet wird, wobei die Schritte c. und d. unter Berücksichtigung der Abschirmung durchgeführt werden, wobei die daraus erhaltenen zusätzlichen Informationen bei der Anpassung gemäß Schritt g. berücksichtigt werden.

5. Verfahren gemäß einem der Ansprüche 1 bis 4, bei dem der mathematische Zusammenhang durch eine Detektorfunktion gebildet ist, welche zumindest eine der nachfolgenden Eigenschaften aufweist:

i. sie ist monoton steigend, und/oder
ii. ihre Definitionsmenge wird aus Energiewerten gebildet, welche größer als null sind, und/oder
iii. ihre Definitionsmenge wird auf eine Zielmenge abgebildet, welche zwischen 0 und 1 liegt.

6. Verfahren gemäß Anspruch 5, bei dem die Detektorfunktion durch eine Sprungfunktion gebildet wird.

7. Verfahren gemäß Anspruch 5, bei dem die Detektorfunktion durch eine kumulative Pareto-Verteilungsfunktion gebildet wird.

8. Verfahren gemäß einem der Ansprüche 1 bis 7, bei dem der Prüfstrahler (18) ein Volumen aufweist, welches kleiner ist als 8 l, bevorzugt kleiner als 1 l, weiter bevorzugt kleiner als 0,125 l.

9. Verfahren gemäß einem der Ansprüche 1 bis 8, bei dem der Prüfstrahler (18) in drei senkrecht zueinander stehenden Raumrichtungen eine Ausdehnung aufweist, welche kleiner ist als 20 cm, bevorzugt kleiner als 10 cm, weiter bevorzugt kleiner als 5 cm.

10. Verfahren gemäß einem der Ansprüche 1 bis 9, bei dem der Detektor (13) als Szintillationszähler, bevorzugt als organischer Szintillationszähler und weiter bevorzugt als Plastikszintillationszähler ausgebildet ist.

11. Verfahren zur Charakterisierung einer Freimessanlage mit einer Prüfkammer (30) und einer Mehrzahl von um die Prüfkammer (30) herum angeordneten Detektoren (13), **gekennzeichnet dadurch, dass** zumindest einer der Detektoren (13) durch ein Verfahren gemäß einem der Ansprüche 1 bis 8 charakterisiert wird.

12. Verfahren gemäß Anspruch 11, bei dem die Prüfkammer (30) ein Volumen aufweist, welches zwischen 1 und 20 m$^3$, vorzugsweise zwischen 5 und 15 m$^3$, weiter vorzugsweise zwischen 8 und 12 m$^3$ liegt.

13. Verfahren gemäß Anspruch 12, bei dem der Prüfstrahler (18) zur Durchführung einer ersten Detektorcharakterisierung in Schritt b. mittig in der Prüfkammer platziert wird, wobei der Prüfstrahler (18) zur Durchführung einer weiteren Detektorcharakterisierung in einem Abstand zu einer Seitenwand der Prüfkammer (30) platziert wird, welcher kleiner ist als 100 cm, bevorzugt kleiner als 50 cm, weiter bevorzugt kleiner als 20 cm.

14. Verfahren gemäß einem der Ansprüche 1 bis 13, bei dem das Platzieren des radioaktiven Prüfstrahlers (18) an einer relativ zum Detektor (13) vorgegebenen Position mit einer Genauigkeit von weniger als 6 cm, vorzugsweise von weniger als 3 cm, weiter vorzugsweise von weniger als 2 cm erfolgt.

15. Anordnung zur Charakterisierung eines Detektors (13) zur Erfassung radioaktiver Strahlung, umfassend den zu charakterisierenden Detektor (13), einen in einer vorgegebenen Position relativ zum Detektor (13) platzierten Prüfstrahler (18), eine mit dem Detektor (13) verbundene Zähleinheit (17) zur Erfassung einer Zählrate des Detektors (13), ein Simulationsmodul (20) zur Ermittlung eines Energiespektrums der von dem radioaktiven Prüfstrahler emittierten und auf den Detektor auftreffenden Strahlung, wobei berücksichtigt wird, in welcher Position der Detektor (13) relativ zum Prüfstrahler (18) angeordnet ist und welche Eigenschaften der Prüfstrahler (18) aufweist, wobei ein Funktionsmodul (21), welches einen mathematischen Zusammenhang zwischen der Energie eines auf den Detektor (13) auftreffenden Teilchens und einer Detektionswahrscheinlichkeit dieses Teilchens umfasst, wobei der Zusammenhang zumindest einen Kalibrierparameter aufweist, sowie durch eine Anpassungseinheit (22), welche dazu ausgebildet ist, das Energiespektrum unter Verwendung des mathematischen Zusammenhangs an die Zählrate anzupassen, wobei zur Anpassung der zumindest eine Kalibrierparameter variiert wird, wobei der so erhaltene Kalibrierparameter bei einer nachfolgenden Vermessung eines realen Messguts verwendbar ist, um den Wirkungsgrad des Detektors (13) bezüglich des realen Messgutes zu bestimmen.

**Claims**

1. A method of characterizing a detector (13) for detecting radioactive radiation (19), comprising the following steps:

a) Providing a radioactive test emitter (18) which is designed to emit radioactive particles (19),
b) Placing the radioactive test emitter (18) at a predetermined position relative to the detector (13);
c) Detecting the radioactive particles (19) emitted by the test emitter (18) and impinging on the detector (13) to determine a count rate;

d) Carrying out a simulation to determine an energy spectrum of the radiation emitted by the radioactive test emitter (18) and impinging on the detector (13), taking into account the position in which the detector (13) is arranged relative to the test emitter (18) during the real measurement according to method step c) and the properties of the test emitter (18);

e) Defining a mathematical relationship between the energy of a particle impinging on the detector (13) and a detection probability of that particle, the mathematical relationship having at least one calibration parameter;

f) Using the mathematical relationship according to step e. and the energy spectrum according to step d. to determine a simulated count rate;

g) Adapting the simulated count rate to the count rate determined in step c., wherein the at least one calibration parameter is varied for adaptation, wherein the calibration parameter thus obtained can be used in a subsequent measurement of a real sample in order to determine the efficiency of the detector (13) with respect to the real sample.

2. The method of claim 1, wherein in step a. a plurality of test emitters (18) are provided, the test emitters comprising radionuclides different from one another, wherein steps b. through d. are performed for each of the test emitters (18), the additional information obtained therefrom being taken into account in the adjustment of step g.

3. The method according to claim 1 or 2, wherein the test emitter (18) or emitters are positioned at a further position relative to the detector (13) different from that mentioned in step b., steps c. and d. each being carried out for the further position, the additional information obtained therefrom being taken into account in the adjustment according to step g..

4. The method according to any one of claims 1 to 3, wherein a shield is arranged between the test emitter (18) and the detector (13), wherein steps c. and d. are performed taking into account the shield, the additional information obtained therefrom being taken into account in the adjustment according to step g.

5. The method of any one of claims 1 to 4, wherein the mathematical relationship is formed by a detector function having at least one of the following properties:

   i. it is monotonously increasing, and/or
   ii. its definition set is formed from energy values which are greater than zero, and/or

   iii. its definition set is mapped to a target set, which is between 0 and 1.

6. The method of claim 5, wherein the detector function is formed by a step function.

7. The method of claim 5, wherein the detector function is formed by a cumulative Pareto distribution function.

8. The method according to any one of claims 1 to 7, wherein the test emitter (18) has a volume that is smaller than 8 l, preferably smaller than 1 l, more preferably smaller than 0.125 l.

9. The method according to any one of claims 1 to 8, wherein the test emitter (18) has an extension in three mutually perpendicular spatial directions which is smaller than 20 cm, preferably smaller than 10 cm, more preferably smaller than 5 cm.

10. The method according to any one of claims 1 to 9, wherein the detector (13) is configured as a scintillation counter, preferably an organic scintillation counter and further preferably a plastic scintillation counter.

11. A method of characterizing an open-air measurement system having a test chamber (30) and a plurality of detectors (13) disposed around the test chamber (30), **characterized in that** at least one of the detectors (13) is **characterized by** a method according to any one of claims 1 to 8.

12. The method according to claim 11, wherein the test chamber (30) has a volume that is between 1 and 20 m$^3$, preferably between 5 and 15 m$^3$, more preferably between 8 and 12 m$^3$.

13. The method according to claim 12, wherein the test emitter (18) for performing a first detector characterization in step b. is placed centrally in the test chamber, wherein the test emitter (18) for performing a further detector characterization is placed at a distance from a side wall of the test chamber (30) which is smaller than 100 cm, preferably smaller than 50 cm, more preferably smaller than 20 cm.

14. A method according to any one of claims 1 to 13, wherein placing the radioactive test emitter (18) at a predetermined position relative to the detector (13) is performed with an accuracy of less than 6 cm, preferably less than 3 cm, more preferably less than 2 cm.

15. Arrangement for characterizing a detector (13) for detecting radioactive radiation, comprising the detector (13) to be characterized, a test emitter (18) placed in a predetermined position relative to the detector (13), a counting unit (17) connected to the detector (13) for detecting a counting rate of the detector (13) a simulation module (20) for determining an energy spectrum of the radiation emitted by the radioactive test emitter and impinging on the detector, taking into account the position in which the detector (13) is arranged relative to the test emitter (18) and the properties of the test emitter (18), wherein a function module (21), which comprises a mathematical relationship between the energy of a particle impinging on the detector (13) and a detection probability of this particle, the relationship having at least one calibration parameter, and by an adaptation unit (22) which is designed for this purpose adapting the energy spectrum to the count rate using the mathematical relationship, wherein the at least one calibration parameter is varied for adaptation, wherein the calibration parameter thus obtained is usable in a subsequent measurement of a real measured object in order to determine the efficiency of the detector (13) with respect to the real measured object.

## Revendications

1. Procédé de caractérisation d'un détecteur (13) de rayonnement radioactif (19), comprenant les étapes suivantes :

a) La mise à disposition d'un émetteur de test radioactif (18), qui est conçu pour émettre des particules radioactives (19),
b) Placer l'émetteur de test radioactif (18) dans une position prédéterminée par rapport au détecteur (13) ;
c) Détecter les particules radioactives (19) émises par l'émetteur de test (18) et frappant le détecteur (13) afin de déterminer un taux de comptage ;
d) Réalisation d'une simulation pour déterminer un spectre d'énergie du rayonnement émis par l'émetteur de test radioactif (18) et arrivant sur le détecteur (13), en tenant compte de la position dans laquelle le détecteur (13) est disposé par rapport à l'émetteur de test (18) pendant la mesure réelle selon l'étape de procédé c) et des propriétés de l'émetteur de test (18) ;
e) Définir une relation mathématique entre l'énergie d'une particule frappant le détecteur (13) et une probabilité de détection de cette particule, la relation mathématique comprenant au moins un paramètre d'étalonnage ;
f) Utiliser la relation mathématique de l'étape e. et le spectre d'énergie de l'étape d. pour déterminer un taux de comptage simulé ;
g) L'adaptation du taux de comptage simulé au taux de comptage déterminé à l'étape c., l'au moins un paramètre d'étalonnage étant modifié pour l'adaptation, le paramètre d'étalonnage ainsi obtenu pouvant être utilisé lors d'une mesure ultérieure d'un produit à mesurer réel, afin de déterminer le rendement du détecteur (13) par rapport au produit à mesurer réel.

2. Procédé selon la revendication 1, dans lequel, à l'étape a., une pluralité d'émetteurs de test (18) sont mis à disposition, les émetteurs de test présentant des radionu-cléides différents les uns des autres, les étapes b. à d. étant effectuées pour chacun des émetteurs de test (18), les informations supplémentaires ainsi obtenues étant prises en compte lors de l'adaptation selon l'étape g..

3. Procédé selon la revendication 1 ou 2, dans lequel la ou les émetteurs de test (18) sont positionnées à une autre position par rapport au détecteur (13), différente de celle mentionnée à l'étape b., les étapes c. et d. étant respectivement effectuées pour l'autre position, les informations supplémentaires ainsi obtenues étant prises en compte lors de l'adaptation selon l'étape g..

4. Procédé selon l'une quelconque des revendications 1 à 3, dans lequel un blindage est disposé entre l'émetteur de test (18) et le détecteur (13), les étapes c. et d. étant effectuées en tenant compte du blindage, les informations supplémentaires obtenues à partir de celui-ci étant prises en compte lors de l'adaptation selon l'étape g..

5. Procédé selon l'une quelconque des revendications 1 à 4, dans lequel la relation mathématique est formée par une fonction de détection présentant au moins l'une des propriétés suivantes :

i. elle est en augmentation monotone, et/ou
ii. sa ensemble de définition est formé de valeurs d'énergie qui sont supérieures à zéro, et/ou
iii. sa ensemble de définition est mappé sur un ensemble cible, qui est compris entre 0 et 1.

6. Procédé selon la revendication 5, dans lequel la fonction de détection est formée par une fonction de saut.

7. Procédé selon la revendication 5, dans lequel la fonction de détection est formée par une fonction de distribution de Pareto cumulative.

8. Procédé selon l'une quelconque des revendications 1 à 7, dans lequel l'émetteur de test (18) a un volume qui est inférieur à 8 l, de préférence inférieur à 1 l, plus préférablement inférieur à 0,125 l.

9. Procédé selon l'une quelconque des revendications 1 à 8, dans lequel l'émetteur de test (18) présente, dans trois directions spatiales perpendiculaires entre elles, une extension qui est inférieure à 20 cm, de préférence inférieure à 10 cm, plus préférentiellement inférieure à 5 cm.

10. Procédé selon l'une quelconque des revendications 1 à 9, dans lequel le détecteur (13) est réalisé sous la forme d'un compteur à scintillations, de préférence un compteur à scintillations organiques et plus préférentiellement un compteur à scintillations plastiques.

11. Procédé de caractérisation d'une installation de mesure libre comprenant une chambre de test (30) et une pluralité de détecteurs (13) disposés autour de la chambre de test (30), **caractérisé en ce qu'**au moins un des détecteurs (13) est **caractérisé par** un procédé selon l'une des revendications 1 à 8.

12. Procédé selon la revendication 11, dans lequel la chambre de test (30) a un volume qui est compris entre 1 et 20 m$^3$, de préférence entre 5 et 15 m$^3$, plus préférablement entre 8 et 12 m$^3$.

13. Procédé selon la revendication 12, dans lequel l'émetteur de test (18) est placé au centre de la chambre de test pour effectuer une première caractérisation de détecteur à l'étape b., dans lequel l'émetteur de test (18) est placé à une distance d'une paroi latérale de la chambre de test (30) qui est inférieure à 100 cm, de préférence inférieure à 50 cm, plus préférablement inférieure à 20 cm, pour effectuer une autre caractérisation de détecteur.

14. Procédé selon l'une quelconque des revendications 1 à 13, dans lequel le placement de l'émetteur de test radioactif (18) dans une position prédéterminée par rapport au détecteur (13) est effectué avec une précision inférieure à 6 cm, de préférence inférieure à 3 cm, de préférence encore inférieure à 2 cm.

15. Dispositif de caractérisation d'un détecteur (13) pour la détection de rayonnement radioactif, comprenant le détecteur (13) à caractériser, un émetteur de test (18) placé dans une position prédéterminée par rapport au détecteur (13), une unité de comptage (17) reliée au détecteur (13) pour détecter un taux de comptage du détecteur (13), un module de simulation (20) pour déterminer un spectre d'énergie du rayonnement émis par l'émetteur de test radioactif et frappant le détecteur, en tenant compte de la position dans laquelle le détecteur (13) est placé par rapport à l'émetteur de test (18) et des propriétés de l'émetteur de test (18), un module fonctionnel (21), qui comprend une relation mathématique entre l'énergie d'une particule arrivant sur le détecteur (13) et une probabilité de détection de cette particule, la relation présentant au moins un paramètre d'étalonnage, ainsi que par une unité d'adaptation (22) qui est conçue à cet effet, d'adapter le spectre d'énergie au taux de comptage en utilisant la relation mathématique, l'au moins un paramètre d'étalonnage étant modifié pour l'adaptation, le paramètre d'étalonnage ainsi obtenu pouvant être utilisé lors d'une mesure ultérieure d'un objet réel à mesurer, afin de déterminer le rendement du détecteur (13) par rapport à l'objet réel à mesurer.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006006411